# EUROPÄISCHE PATENTSCHRIFT

(11) **EP 0 682 816 B1**
(45) Veröffentlichungstag und Bekanntmachung des Hinweises auf die Patenterteilung: **28.05.1997**
(21) Anmeldenummer: 94905730.1
(22) Anmeldetag: 29.01.1994
(51) Int. Cl.: H01M 8/14, H01M 4/88

(54) **VERFAHREN ZUR HERSTELLUNG DER KATHODEN-SCHICHT VON SCHMELZKARBONAT-BRENNSTOFFZELLEN**
PROCESS FOR PRODUCING THE CATHODE LAYER OF MOLTEN CARBONATE FUEL CELLS
PROCEDE DE PRODUCTION DE LA COUCHE CATHODIQUE DE CELLULES ELECTROCHIMIQUES EN CARBONATE FONDU

(30) Priorität: 04.02.1993 DE 4303136
(43) Veröffentlichungstag der Anmeldung: 22.11.1995
(73) Patentinhaber: MTU MOTOREN- UND TURBINEN-UNION FRIEDRICHSHAFEN GMBH, D-88045 Friedrichshafen (DE)
(72) Erfinder: JANTSCH, Uwe,, 89160 Dornstadt (DE); KOCH, Hermann, D-70178 Stuttgart (DE); ROHLAND, Bernd, 89081 Ulm (DE); WEILBERG, Frank, D-71735 Eberdingen (DE); WENDT, Hartmut, D-64807 Dieburg (DE)
(86) Internationale Anmeldenummer: EP9400253
(87) Internationale Veröffentlichungsnummer: WO9418713

(56) Entgegenhaltungen:
- EP-A- 0 433 681
- EP-A- 0 448 517
- DE-A- 4 030 904
- DE-A- 4 030 944
- US-A- 4 721 513
- CHEMICAL ABSTRACTS, vol. 117, no. 20, 16. November 1992, Columbus, Ohio, US; abstract no. 195208p, YAMANAKA ET AL 'Oxygen cathodes from nickel-iron alloys for molten-carbonate fuel cells'
- PATENT ABSTRACTS OF JAPAN vol. 17, no. 214 (E-1357)27. April 1993 & JP,A,04 351 854 (MITSUBISHI ELECTRIC CORP) 7. Dezember 1992
- JOURNAL OF APPLIED ELECTROCHEMISTRY. Bd. 20 , 1990 , LONDON GB Seiten 606 - 610 J. NIIKURA ET AL 'Fabrication and properties of combined electrode/electrolyte tape for molten carbonate fuel cells'
- PROCEEDINGS OF THE 2TH SYMPOSIUM ON MOLTEN CARBONATE FUEL CELL TECHNOLOGY Bd. 90, Nr. 16 , 1990 , PENNINGTON Seiten 226 - 246 J. L. SMITH ET AL 'DEVELOPMENT OF CATHODE MATERIALS AND STRUCTURES FOR THE MOLTEN CARBONATE FUEL CELL'
- CHEMICAL ABSTRACTS, vol. 119, no. 18, 1. November 1993, Columbus, Ohio, US; abstract no. 184802t, HADO KAZUHITO ET AL 'Manufacture of cathodes for molten-carbonate fuel cells'

## Beschreibung

Die Erfindung bezieht sich auf ein Verfahren zur Herstellung einer Schmelzcarbonat-Brennstoffzelle nach dem Oberbegriff des Anspruchs 1.

Derartige Schmelzcarbonat-Brennstoffzellen (englisch: Molten Carbonate Fuel Cells, MCFC) sind bekannt. Sie ermöglichen auf direktem elektrochemischen Wege elektrische Energie mit einem Wirkungsgrad von mehr als 50% aus der Reaktion eines wasserstoffreichen Brenngases mit Sauerstoff zu gewinnen. Die elektrische Nutzenergie kann zwischen der Anoden-Schicht und der Kathoden-Schicht als Gleichspannung bzw. -strom abgenommen werden. Als Elektrolyt kommt ein geschmolzenes Gemisch aus Lithiumcarbonat und Kaliumcarbonat oder Natriumcarbonat und weiteren Zuschlägen zum Einsatz. Der schmelzflüssige Elektrolyt wird in der feinporösen Matrix-Schicht, die meist aus Lithiumaluminat besteht, gehalten und trennt die Gasräume der Anode (Brenngas) und Kathode (Luft) voneinander. Die Schmelzcarbonat-Brennstoffzelle arbeitet bei Temperaturen zwischen 550 und 750°C; sie kann atmosphärisch, aber auch mit mehreren Hundert kPa Überdruck betrieben werden.

Der Kathoden-Schicht wird ein Gasgemisch zugeführt, das Sauerstoff und Kohlendioxid enthält. Der Sauerstoff wird an der Kathoden-Schicht reduziert und bildet mit dem Kohlendioxid Carbonationen, die vom Elektrolyten aufgenommen werden. An der Anoden-Schicht wird der Wasserstoff aus dem Brenngas mit den Carbonationen der Elektrolytschmelze zu Kohlendioxid und Wasser oxidiert. Das an der Anoden-Schicht entstehende Kohlendioxid kann zum Kathodengas zurückgeführt werden. Als Brenngas können auch wasserstoffreiche Gase, wie Erdgas, in der Schmelzcarbonat-Brennstoffzelle eingesetzt werden. Die Gase werden mit Hilfe eines Katalysators und unter Wärmezufuhr, wobei die beim Brennstoffzellenbetrieb freiwerdende Wärme genutzt wird, zu einem wasserstoffreichen Brenngas reformiert, das an der Anoden-Schicht der Brennstoffzelle umgesetzt wird.

Schmelzcarbonat-Brennstoffzellen werden gegenwärtig meist hergestellt, indem zunächst eine Schichtanordnung, bestehend aus einer porösen Nickelanoden-Schicht, einer porösen Lithiumaluminat-Matrixschicht und einer porösen Nickelkathoden-Schicht zwischen den Stromkollektorplatten der Zelle deponiert und justiert wird. Im allgemeinen liegt an jeder der beiden Stromkollektorplatten der Brennstoffzelle noch eine metallische Stromübertragungsplatte als bipolare Platte an. Mehrere solcher Brennstoffzellen werden stapelförmig in einem Zellenhalter angeordnet. Die Matrix-Schicht steht über die Elektroden-Schichten, also die Kathoden- und die Anoden-Schicht, vor. Der überstehende Rand der Matrix-Schicht wird zwischen den Rändern der bipolaren Platten des Brennstoffzellenstapels eingepreßt, wodurch die Abdichtung der Elektrodenräume und elektrische Serienschaltung der Zellen im Inneren eines Brennstoffzellenstapels bewirkt wird. Bei Brenngas und Luftzuführung mit externer Verteilung auf die Elektrodenräume zwischen bipolarer Platte und benachbarter Elektroden-Schicht, sog. externe Gasverteilung ("Manifolding"), enthalten die porösen Elektroden-Schichten den Schmelzelektrolyten beim Anfahren in ihren Poren, während bei der internen Gasverteilung der Schmelzelektrolyt als Lithiumkaliumcarbonatfolie an den Elektroden-Schichten in die Schichtanordnung eingelegt wird, so daß der Schmelzelektrolyt erst während der Anfahrprozedur der Brennstoffzelle von der Matrix-Schicht aufgesaugt wird.

Die externe und interne Gasverteilung bei einer Schmelzcarbonat-Brennstoffzelle unterscheiden sich prinzipiell dadurch, daß bei externer Gasverteilung keine Schwindung des Zellenstapels beim Anheizen in Kauf genommen werden kann, weil sonst die äußerliche Gasabdichtung des Gasverteilerkastens zu den Zellen verlorengeht.

Zur Herstellung der porösen Elektroden-Schichten wird aus Nickelpulver durch Zugabe von Bindemitteln, Weichmachern und weiteren Hilfsstoffen eine Suspension oder ein Schlicker eingestellt, der zu einer Folie ausgezogen wird. Die Folie wird zu den einsatzfähigen Elektroden-Schichten formiert, indem sie aufgeheizt wird, wobei bis maximal 450°C alle organischen Bestandteile ausgetrieben werden. Daraufhin wird zwischen 600 und 1200°C unter reduzierender Atmosphäre gesintert. Vielfach wird die Elektrodensinterung in einem Schutzgasofen vorgenommen, und die fertiggesinterten, metallischen Elektroden-Schichten in eine Schmelzcarbonat-Brennstoffzelle eingebaut, wo sie bei geeigneter Kontrolle der Temperatur und der Gasatmosphäre auf die Betriebstemperatur der Brennstoffzelle aufgeheizt werden, so daß durch die Einwirkung des geschmolzenen lithiumhaltigen Elektrolyten eine Kathoden-Schicht aus lithiiertem Nickeloxid gebildet wird. Durch die Lithiierung, d. h. die Dotierung des Nickeloxids mit Lithiumoxid, wird die Kathode elektrisch leitfähig gemacht. Auf diese Weise werden z. B. 2 Mol-% Lithiumoxid in das Nickeloxid eingebaut, was dessen elektrische Leitfähigkeit deutlich erhöht.

Die so hergestellte lithiierte Nickeloxid-Kathoden-Schicht zeichnet sich aufgrund ihrer Struktur, die von der gesinterten porösen Nickel-Schicht herrührt, durch gute Leistungsdaten aus. Allerdings löst sich das Nickeloxid in dem Schmelzelektrolyten mit einer Sättigungskonzentration von etwa 25 ppm, wodurch sich bei Betriebsbedingungen metallisches Nickel in der Matrix-Schicht nahe der Anoden-Schicht abscheidet. Dies führt normalerweise zum Versagen der Brennstoffzelle durch inneren elektrischen Kurzschluß nach etwa 8000 bis 20000 Betriebsstunden. Die bekannte lithiierte Nickeloxidkathoden-Schicht weist also eine eingeschränkte Lebensdauer auf, die bei Betrieb unter erhöhtem Druck noch weiter absinkt.

Es ist ferner bekannt, für die Kathoden-Schicht ein in der Schmelze unlösliches Lithiumcobaltit- (LiCoO₂)- oder auch Lithiumferrit- (LiFeO₂)- Pulver zu verwenden. Die Pulver werden zu einer Folie verarbeitet, wobei Graphit als Porenbildner eingesetzt wird. Aus der Folie wird eine Lithiumcobaltit- bzw. Lithiumferrit-Kathoden-Schicht gesintert und dann zusammen mit der Matrix-Schicht und der Anoden-Schicht in die Brennstoffzelle eingebaut. Die auf diese oxidkeramische Weise hergestellte Kathoden-Schicht weist nicht die charakteristische Feinstruktur der aus einer porösen Nickel-Schicht gebildeten Nickeloxidkathode auf. Auch ist sie äußerst spröde, was den flächigen Stromkontakt zur kathodischen Stromkollektorplatte erschwert.

Aus der DE-OS 40 30 944 A1 ist es bekannt, zur Herstellung einer Lithiumferrit-Kathoden-Schicht einer Schmelzcarbonat-Brennstoffzelle eine gesinterte Carbonyleisen-Schicht zu oxidieren und anschließend mit dem Lithiumcarbonat der Schmelze in Kontakt zu bringen.

In der DE-OS 30 40 904 A1 wird eine Kathoden-Schicht für eine Schmelzcarbonat-Brennstoffzelle aus lithiiertem Nickeloxid und Lithiumferrit beschrieben, die durch Oxidation einer gesinterten porösen Folie aus im wesentlichen Nickel- und Eisenteilchen in der lithiumcarbonathaltigen Schmelze der Brennstoffzelle erhalten wird.

Die in der EP 0 433 681 A dargestellte Schmelzcarbonatbrennstoffzelle beinhaltet eine Elektrode aus Nickel, Cobalt oder Mischungen davon. Der Schmelzelektrolyt besteht aus Mischungen aus zwei oder mehr Komponenten von Lithiumcarbonat, Kaliumcarbonat und Natriumcarbonat, beispielsweise aus 62 Mol% Lithiumcarbonat und 38 Mol% Kaliumcarbonat. Der Anfahrvorgang ist so ausgelegt, daß eine Oxidation der metallischen Kathode im wesentlichen nicht stattfindet, bevor der Elektrolyt geschmolzen ist und in die Elektrode eingedrungen ist.

In dem Bericht: Proceedings ofthe Second Symposium on Molten Carbonate Fuel Cell Technology, Bd. 90, Nr. 16, 1990, Pennington, Seiten 226 - 246, J. L. Smith et al., "Development of Cathode Materials And Structures for the Molten Carbonate Fuel Cell" sind Kathoden für Brennstoffzellen erwähnt, die aus Lithiumferrit oder Lithiumcobaltit bestehen. Es ist ausgeführt, daß bei Anwesenheit einer Lithiumcarbonat enthaltenden Elektrolytschmelze, wie sie bei Schmelzkarbonatbrennstoffzellen üblicherweise verwendet wird, und bei Anwesenheit von Sauerstoff Eisenoxid zu Lithiumferrit umgewandelt wird.

Aufgabe der Erfindung ist es, ein Verfahren zur Herstellung einer Schmelzcarbonat-Brennstoffzelle mit einer Kathoden-Schicht, die bei hoher Lebensdauer hohe Stromdichten bei geringen Überspannungen erlaubt, zur Verfügung zu stellen.

Dies wird erfindungsgemäß mit dem in Anspruch 1 gekennzeichneten Verfahren erreicht. Vorteilhafte Ausgestaltungen der Erfindung sind in den Unteransprüchen angegeben.

Bei dem erfindungsgemäßen Verfahren wird eine im Schmelzelektrolyten praktisch unlösliche Kathoden-Schicht gebildet, die eine wesentlich erhöhte Lebensdauer auch bei Druckbetrieb der Brennstoffzelle garantiert. Das erfindungsgemäße Verfahren ist dabei so gestaltet, daß das gebildete Lithiumcobaltit oder Lithiumferrit als Kathodenmaterial derart strukturiert ist, daß eine den Nickeloxid-Kathoden analoge Feinstruktur entsteht, wodurch hohe Stromdichten bei geringen Überspannungen erreicht werden. Zugleich kann nach dem erfindungsgemäßen Verfahren ein flächiger Stromkontakt der Kathoden-Schicht zu den Stromkollektorplatten erreicht werden.

Nach dem erfindungsgemäßen Verfahren wird aus einer duktilen Cobalt- oder Eisenelektroden-Schicht, deren Poren mit Lithiumcarbonat (Li₂CO₃) gefüllt sind, nach Oxidation unter Volumenzunahme eine Lithiumcobaltit-(LiCoO₂)- oder Lithiumferrit-(LiFeO₂)-Schicht gebildet. Zur Umsetzung zur Lithiumcobaltit- oder Lithiumferrit-Schicht wird die Elektrodenplatte vorzugsweise mit der Matrix-Schicht und der Anoden-Schicht, den Stromkollektorplatten und den bipolaren Platten der Brennstoffzelle vereinigt und in den Zellenhalter eingesetzt. D. h., das erfindungsgemäße Verfahren stellt dann eine spezielle Anfahrprozedur der Brennstoffzelle dar. Dabei stabilisiert der Lithiumcobaltit- oder Lithiumferrit-Bildungsprozeß durch seine Volumenzunahme die Herstellung der elektrischen und mechanischen Verbindungen zwischen den einzelnen Komponenten der Brennstoffzellen. Die Ausgangselektroden-Schichten aus metallischem Cobalt oder Eisen sind dabei so porös gestaltet, daß die Volumenzunahme während der Oxidation zu Cobaltoxid oder Eisenoxid und die anschließende Reaktion mit Lithiumcarbonat zu Lithiumcobaltit oder Lithiumferrit keine den Stofftransport behindernde Verdichtung bewirkt. Vielmehr wird die Feinstruktur der Lithiumcobaltit- oder Lithiumferrit-Kathoden-Schicht durch die Feinstruktur der hochporösen Ausgangselektroden-Schicht aus metallischem Cobalt oder Eisen geprägt. Die Sinterhälse zwischen den Cobalt- oder Eisenkörnern dieser Ausgangselektroden-Schicht, die analog zu einer porösen Nickelelektroden-Schicht ausgebildet sind, finden sich in verdickter Form in der Feinstruktur der Lithiumcobaltit- oder Lithiumferrit-Kathoden-Schicht wieder und bewirken den für den Polarisationswiderstand günstigen Elektrodenaufbau.

Zur Herstellung der Ausgangselektroden-Schicht wird vorzugsweise Cobalt- oder Eisenpulver mit einer mittleren Teilchengröße von 0,5 bis 5 µm verwendet, insbesondere Carbonyl-Cobalt oder Carbonyl-Eisen.

Aus dem Cobalt- oder Eisenpulver wird mit einem wäßrigen Bindemittel eine Suspension hergestellt, die auch als Schlicker bezeichnet wird oder als pastöse Masse ausgebildet sein kann. Als Bindemittel wird ein organisches Bindemittel verwendet, beispielsweise Polyvinylalkohol. Die Suspension kann auch weitere Hilfsstoffe, beispielsweise Glycerin, enthalten.

Aus dem Schlicker wird mit einem Folienziehgerät, nach einem Druckverfahren, durch Gießen oder dgl. eine Folie hergestellt, die an der Luft getrocknet wird. Die Dicke der getrockneten Folie kann beispielsweise 0,1 bis 2 mm betragen.

Die getrocknete Folie wird dann auf maximal 450°C aufgeheizt, um alle organischen Bestandteile auszutreiben. Danach wird sie etwa 0,5 bis 12 h in einer reduzierenden Atmosphäre zu einer hochporösen Cobalt- oder Eisen-Schicht gesintert. Das Sintern des Eisens erfolgt bei 450 bis 800°C, das Sintern des Cobalts bei 800 bis 1000°C.

Die so hergestellte, hochporöse Cobalt- oder Eisen-Schicht wird dann mit Lithiumcarbonat gefüllt. Die Cobalt- oder Eisen-Schicht kann als solche mit Lithiumcarbonat gefüllt werden, also getrennt von der Matrix- und Anoden-Schicht, oder sie kann gefüllt werden, nachdem sie mit der Matrix- und Anoden-Schicht sowie ggf. den übrigen Komponenten der Brennstoffzellen, also den Stromkollektorplatten und den polaren Platten, entsprechend der Schichtfolge in der Brennstoffzelle vereinigt worden ist.

Das Füllen der Cobalt- oder Eisen-Schicht mit Lithiumcarbonat kann mit einer Lithiumcarbonat-Folie oder -Schicht erfolgen, die an der Cobalt- oder Eisen-Schicht angeordnet und dann geschmolzen wird. Das Aufschmelzen des Lithiumcarbonats erfolgt in einer nichtoxidierenden, vorzugsweise reduzierenden Atmosphäre bei 730 bis 760°C. Wenn die Cobalt- oder Eisen-Schicht in Schichtanordnung mit der Matrix- und Anoden-Schicht mit Lithiumcarbonat gefüllt wird, wird die Lithiumcarbonat-Schicht zwischen der Cobalt- oder Eisen-Schicht einerseits und der Matrix-Schicht andererseits angeordnet.

Ferner ist es möglich, eine mit Lithiumcarbonat gefüllte Cobalt- oder Eisen-Schicht dadurch zu erhalten, daß die Kathode zweischichtig ausgebildet wird. Dazu kann die Cobalt- oder Eisen-Schicht auf ihrer von der Matrix abgewandten Seite mit einer porösen Nickel-Schicht versehen sein, die beispielsweise durch Sintern von Nickelpulver hergestellt worden ist. Die poröse Nickel-Schicht ist mit Lithiumcarbonat gefüllt. Die Dicke der Cobalt- oder Eisen-Schicht kann dann erheblich reduziert werden, also beispielsweise 0,1 bis 0,5 mm betragen, während die Nickel-Schicht dicker ist, also beispielsweise 0,5 bis 1,5 mm beträgt. In diesem Falle wird also die Cobalt- oder Eisen-Schicht durch Schmelzen des in der Nickel-Schicht vorhandenen Lithiumcarbonats gefüllt. Dabei besteht die Möglichkeit, das in der Nickel-Schicht befindliche Lithiumcarbonat (Li₂CO₃) durch lithiumreicheres Lithiumkaliumcarbonat als es dem Schmelzelektrolyten entspricht, zu ersetzen und so die Bildungstemperatur von Lithiumcobaltit oder Lithiumferrit entsprechend dem dem gegenüber reinem Li₂CO₃ niedrigeren Schmelzpunkt des lithiumreichen Carbonats zu senken. Das wird möglich, weil das oberhalb 520°C nach Umschalten auf oxidierende Kathodengasatmosphäre gebildete Cobaltoxid oder Eisenoxid schon ab 650°C mit dem Carbonat zu Lithiumcobaltit oder Eisenferrit reagiert.

Die Matrix-Schicht besteht aus einem keramischen Material, beispielsweise Lithiumaluminat, die Anoden-Schicht beispielsweise aus hochporösem Nickel, das durch Sintern von Nickelpulver ggf. mit Zusätzen hergestellt sein kann.

Die mit Lithiumcarbonat gefüllte Cobalt- oder Eisen-Schicht, die mit der Matrix- und der Anoden-Schicht vereinigt ist, wird in der Zelle zu Cobaltoxid und Eisenoxid oxidiert. Dann ist es notwendig, die Anoden-Schicht vor Oxidation zu schützen.

Das kann z. B. mit einer mit dem Schmelzelektrolyten aus Lithium- und Kaliumcarbonat gefüllten Anoden-Schicht erreicht werden, und zwar dadurch, daß die Schichtanordnung auf die Schmelztemperatur des Schmelzelektrolyten erwärmt wird. Der geschmolzene Schmelzelektrolyt wird dann von der Matrix-Schicht aufgesaugt, wodurch die Anoden-Schicht von der Kathoden-Schicht gasdicht getrennt wird. Das Schmelzen des Schmelzelektrolyten erfolgt bei 450 bis 520°C, und zwar in nichtoxidierender, vorzugsweise reduzierender Atmosphäre. Stattdessen kann, um die Anode vor Oxidation zu schützen, auch eine Matrix aus zwei Lagen verwendet werden, wobei zwischen den beiden Matrixlagen der Schichtanordnung eine Schmelzelektrolyt-Schicht angeordnet wird.

Der Suspension zur Herstellung der Cobalt- oder Eisen-Schicht kann Graphit als Porenbilder zugesetzt werden. Der Graphit weist vorzugsweise eine mittlere Teilchengröße von 10 bis 40 µm auf, wobei er in der Suspension in einer Menge von 10 bis 30 Gew.-%, bezogen auf das Gewicht des Cobalts oder Eisens, vorliegen kann. Der Graphit wird zur Porenbildung verbrannt.

Das Verbrennen des Graphits kann dabei nach dem Sintern der Cobalt- oder Eisen-Schicht, also vor dem Füllen dieser Schicht mit Lithiumcarbonat erfolgen. Dazu wird die Cobalt- oder Eisen-Schicht nach dem Sintern kurzzeitig einer oxidierenden Atmosphäre bei einer Temperatur von 600 bis 900°C ausgesetzt.

Unabhängig davon, ob die Cobalt- oder Eisen-Schicht Graphit enthält oder nicht, wird, wenn die Anode vor Oxidation geschützt worden ist, das Cobalt oder Eisen zu Cobaltoxid oder Eisenoxid oxidiert, beispielsweise an der Luft. Dazu wird die Cobalt- oder Eisen-Schicht auf eine Temperatur von maximal 680°C aufgeheizt, ohne daß das in den Poren der Cobalt- oder Eisen-Schicht vorhandene Lithiumcarbonat schmilzt. Die Oxidationszeit beträgt im allgemeinen 2 bis 12 h.

Anschließend erfolgt die Umsetzung des Cobaltoxids oder Eisenoxids mit dem in den Poren der Schicht vorhandenen Lithiumcarbonat zu Lithiumcobaltit oder Lithiumferrit. Die Umsetzung erfolgt oberhalb der Schmelztemperatur des Lithiumcarbonats, vorzugsweise bei etwa 730°C.

Die nachstehenden Beispiele dienen der weiteren Erläuterung der Erfindung.

### Beispiel 1

Als Ausgangskomponenten für eine Nickelanoden-Schicht, eine Lithiumaluminat-Matrixschicht und eine Cobalt-Schicht, aus der die Kathode hergestellt wird, werden mit einem Folienziehgerät hergestellte grüne Folien verwendet. Die Kathodenfolie ist dabei unter Verwendung von Carbonyl-Cobalt und Graphitpulver hergestellt worden. Die Matrixfolie wird direkt eingesetzt. Die Anodenfolie wird bei etwa 800°C reduzierend gesintert und bei etwa 550°C mit dem Schmelzelektrolyten getränkt, der in den Poren der Anodenfolie beim Abkühlen erstarrt. Die Kathodenfolie wird bei etwa 900°C reduzierend gesintert, worauf bei etwa 700°C durch kurzzeitiges Einwirkenlassen von oxidierenden Ofenatmosphäre das als Porenbildner eingesetzte Graphitpulver ausgebrannt wird. Nach Abkühlen werden die Poren der Cobaltfolie bei etwa 750°C in einem zweiten reduzierend ausgeführten Heizprozeß mit Lithiumcarbonat gefüllt.

In der Reihenfolge Nickelanoden-, Matrix- und Cobalt-Schicht werden die drei Folien zwischen den jeweiligen Stromkollektorplatten angeordnet und diese Einzelzellbündel mit den bipolaren Platten zur Brennstoffzelle zusammengebaut. Die Brennstoffzelle wird dann auf etwa 520°C aufgeheizt, wobei die Anoden-Schicht und die Cobalt-Schicht mit 2% Wasserstoff enthaltendem Stickstoff gespült werden. Ab etwa 490°C saugt die Matrix-Schicht den in der Anoden-Schicht befindlichen Schmelzelektrolyten auf und dichtet dadurch den Anodenraum vom Kathodenraum der Brennstoffzelle ab. Der Kathodenraum der Brennstoffzelle wird dann mit Luft gespült, wobei die Cobaltkörner der Kathodenschicht zu Cobaltoxid oxidiert werden, ohne ihre Feinstruktur deutlich zu verändern. Dabei wird die Brennstoffzelle von 520°C auf 680°C aufgeheizt, ohne daß das Lithiumcarbonat in den Poren schmilzt.

Anschließend wird die Temperatur auf etwa 730°C gesteigert, um das Lithiumcarbonat in den Poren der Cobaltoxid-Schicht zu schmelzen. Aus dem geschmolzenen Lithiumcarbonat und den Cobaltoxid-(Co₃O₄)-Körnern wird unter Volumenzunahme eine Lithiumcobaltit-Kathoden-Schicht gebildet. Die Volumenzunahme bewirkt außerdem eine geringe Dickenausdehnung, die die Kathoden-Schicht, die Matrix-Schicht, die Anoden-Schicht und die Stromkollektorplatten durch den dabei entstehenden mechanischen Druck miteinander verbindet.

Eine mikroskopische Aufnahme der so hergestellten Lithiumcobaltit-Kathoden-Schicht ist beigefügt.

### Beispiel 2

Es werden mehrere Brennstoffzellen mit folgendem Schichtaufbau zusammengesetzt:
Bipolare Platte
Stromkollektorplatte
Nickel-Schicht, getränkt mit Lithiumcarbonat
Cobalt/Graphit-Schicht
Matrix-Schicht
Nickelanoden-Schicht, getränkt mit Schmelzelektrolyt
Stromkollektorplatte
Bipolare Platte

Die Nickel-Schicht weist eine Stärke von 0,8 mm und die Cobalt/Graphit-Schicht von 0,2 mm auf.

Gegenüber dem Beispiel 1 ist also wie beim Beispiel 2 auch bei diesem Beispiel das Graphit noch nicht verbrannt. Darüberhinaus ist auch auf der von der Matrix-Schicht abgewandten Seite der dünnen Cobalt/Graphit-Schicht eine mit Lithiumcarbonat getränkte Nickel-Schicht vorgesehen, die dazu dient, die zu Cobaltoxid oxidierte Cobalt-Schicht mit Lithiumcarbonat zu tränken.

Dabei besteht die Möglichkeit, das in der Nickelschicht befindliche Lithiumcarbonat durch lithiumreicheres Lithiumkaliumcarbonat zu ersetzen und so die Bildungstemperatur von Lithiumcobaltit entsprechend dem niedrigeren Schmelzpunkt des lithiumreichen Lithiumkaliumcarbonats zu senken. Das wird möglich, weil das bei oberhalb 520°C nach Umschalten auf oxidierende Kathodengasatmosphäre gebildete Cobaltoxid mit dem lithiumreichen Lithiumkaliumcarbonat ab 650°C mit ausreichender Geschwindigkeit zu Lithiumcobaltit reagiert. Gleiches gilt für Eisenoxid und Lithiumferrit. Unter "lithiumreichem Lithiumkaliumcarbonat" ist dabei ein Lithiumkaliumcarbonat zu verstehen, das mehr Lithiumcarbonat enthält, als es der bei 490°C schmelzenden Mischung von 62 Mol% Li₂CO₃ und 38 Mol% K₂CO₃ entspricht.

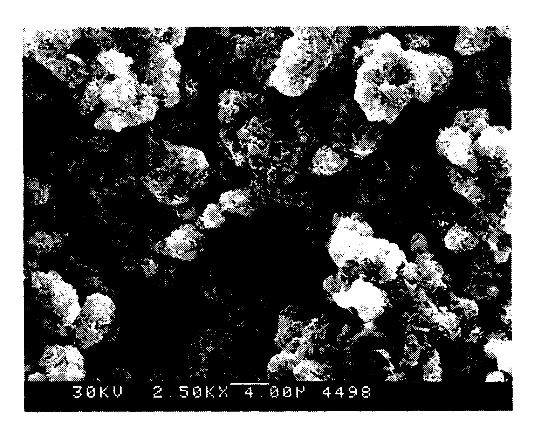

## Patentansprüche

1. Verfahren zur Herstellung einer Schmelzcarbonat-Brennstoffzelle aus einer mit einem lithiumcarbonathaltigen Schmelzelektrolyten getränkten Matrix-Schicht, die auf einer Seite mit einer porösen Anoden-Schicht und auf der anderen Seite mit einer porösen Kathoden-Schicht aus Lithiumcobaltit oder Lithiumferrit versehen ist, **dadurch gekennzeichnet,** daß die Kathoden-Schicht durch Füllen einer porösen Cobalt- oder Eisen-Schicht mit reinem Lithiumcarbonat oder mit einem lithiumreicheren Lithium-Kaliumcarbonatgemisch, als es dem Schmelzelektrolyten entspricht, in einem ersten Verfahrensschritt, Oxidation der mit Lithiumcarbonat gefüllten Cobalt- oder Eisen-Schicht in einer oxidierenden Atmosphäre zu einer mit Lithiumcarbonat gefüllten Cobaltoxid- oder Eisenoxid-Schicht bei einer Temperatur unterhalb des Schmelzpunktes des Lithiumcarbonats in einem zweiten Verfahrensschritt, Erhöhung der Temperatur über den Schmelzpunkt des Lithiumcarbonats und Umsetzung des Cobaltoxids oder Eisenoxids mit Lithiumcarbonat zu Lithiumcobaltit oder Lithiumferrit in einem dritten Verfahrensschritt gebildet wird.

2. Verfahren nach Anspruch 1, **dadurch gekennzeichnet,** daß die Oxidation der Cobalt- oder Eisen-Schicht zu der Cobaltoxid- oder Eisenoxid-Schicht in einem Temperaturbereich von 520 bis 680° C durchgeführt wird.

3. Verfahren nach Anspruch 1 oder 2, **dadurch gekennzeichnet,** daß die Umsetzung des Cobaltoxids oder Eisenoxids mit dem Lithiumcarbonat zu Lithiumcobaltit oder Lithiumferrit in einem Temperaturbereich von 650 bis 730° C durchgeführt wird.

4. Verfahren nach einem der vorstehenden Ansprüche, **dadurch gekennzeichnet,** daß die poröse Cobalt- oder Eisen-Schicht aus einer Suspension aus feingepulvertem Cobalt oder Eisen in einem flüssigen Bindemittel, Verarbeitung der Suspension zu einer Folie und Sintern der Folie in einer reduzierenden Atmosphäre gebildet wird.

5. Verfahren nach Anspruch 4, **dadurch gekennzeichnet,** daß das Bindemittel vor dem Sintern durch Erhöhung der Temperatur auf maximal 450° C aus der Folie ausgetrennt wird.

6. Verfahren nach Anspruch 4 oder 5, **dadurch gekennzeichnet,** daß der Suspension pulverförmiger Graphit zugemischt wird, der nach dem Sintern oxidiert wird.

7. Verfahren nach Anspruch 6, **dadurch gekennzeichnet,** daß der Anteil des Graphits in der Suspension, bezogen auf das Gewicht des Cobalts oder Eisens, auf 10 bis 30 Gew.-% eingestellt wird.

8. Verfahren nach Anspruch 6 oder 7, **dadurch gekennzeichnet**, daß Graphit einer mittleren Tellchengröße von 10 bis 40 µm eingesetzt wird.

9. Verfahren nach einem der Ansprüche 6 bis 8, **dadurch gekennzeichnet,** daß der Graphit verbrannt wird, bevor die Cobalt- oder Eisen-Schicht mit Llthlumcarbonat gefüllt wird.

10. Verfahren nach einem der Ansprüche 6 bis 8, **dadurch gekennzeichnet,** daß der Graphit nach dem Füllen der Cobalt- oder Eisen-Schicht mit Llthlumcarbonat verbrannt wird.

11. Verfahren nach einem der vorstehenden Ansprüche, **dadurch gekennzeichnet,** daß die Cobalt- oder Eisen-Schicht vor Oxidation zur Cobaltoxid- oder Eisenoxid-Schicht mit der Matrix-Schicht und der Anoden-Schicht zu einer der Brennstoffzelle entsprechenden Schichtanordnung vereinigt wird.

12. Verfahren nach Anspruch 11, **dadurch gekennzeichnet**, daß die poröse Cobalt- oder Eisen-Schicht erst mit Llthlumcarbonat gefüllt und dann mit der Matrix-Schicht und der Anoden-Schicht zu der Schichtanordnung vereinigt wird.

13. Verfahren nach Anspruch 11, **dadurch gekennzeichnet,** daß in der Schichtanordung eine Zwischenschicht aus Lithiumcarbonat zwischen der Cobalt- oder Eisen-Schicht und der Matrix-Schicht angeordnet wird, wobei die Lithiumcarbonat-Zwischenschicht zur Füllung der Cobalt- oder Eisen-Schicht mit Lithiumcarbonat vor der Oxidation der Cobalt- der Eisen-Schicht zur Cobaltoxid- oder Eisenoxid-Schicht geschmolzen wird.

14. Verfahren nach Anspruch 12 oder 13, **dadurch gekennzeichnet,** daß die Anoden-Schicht vor Bildung der Schichtanordnung mit einem Schmelzelektrolyten gefüllt wird.

15. Verfahren nach Anspruch 12 odere 13, **dadurch gekennzeichnet,** daß die Matrix-Schicht aus zwei Lagen besteht und in der Schichtanordnung zwischen den beiden Lagen der Matrix-Schicht eine Zwischenschicht aus dem Schmelzelektrolyten angeordnet wird.

16. Verfahren nach Anspruch 14 oder 15, **dadurch gekennzeichnet,** daß der Schmelzelektrolyt vor der Oxidation der Cobalt- oder Eisen-Schicht zur Cobaltoxid- oder Eisenoxid-Schicht geschmolzen wird.

17. Verfahren nach Anspruch 16, **dadurch gekennzeichnet,** daß das Schmelzen des Schmelzelektrolyten In reduzierender Atmosphäre durchgeführt wird.

18. Verfahren nach einem der vorstehenden Ansprüche, **dadurch gekennzeichnet,** daß die Schichtanordnung auf der der Matrix-Schicht abgewandten Seite der Cobalt- oder Eisen-Schicht mit einer mit Lithiumcarbonat oder lithiumreichen Lithiumkaliumcarbonat gefüllten porösen Nickel-Schicht versehen wird, wobei das Lithiumcarbonat oder lithiumreiche Lithiumkaliumcarbonat nach der Oxidation der Cobalt- oder Eisen-Schicht geschmolzen und die Nickel-Schicht dabei zu einer Nickeloxid-Schicht oxidiert wird.

19. Verfahren nach Anspruch 18, **dadurch gekennzeichnet,** daß eine Nickel-Schicht, die eine größere Schichtdicke als die Cobalt- oder Eisen-Schicht aufweist, eingesetzt wird.

## Claims

1. Process for the production of a molten carbonate fuel cell comprising a matrix layer which is impregnated with a lithium-carbonate-containing molten electrolyte and which is provided on one side with a porous anode layer and on the other side with a porous cathode layer composed of lithium cobaltite or lithium ferrite, characterized in that the cathode layer is formed by filling a porous cobalt layer or iron layer with pure lithium carbonate or with a lithium-rich lithium/potassium carbonate mixture, as appropriate to the molten electrolyte, in a first process step, oxidation of the cobalt layer or iron layer filled with lithium carbonate in an oxidizing atmosphere to form a cobalt oxide or iron oxide layer filled with lithium carbonate at a temperature below the melting point of lithium carbonate in a second process step, increasing the temperature above the melting point of the lithium carbonate and converting the cobalt oxide or iron oxide with lithium carbonate into lithium cobaltite or lithium ferrite in a third process step.

2. Process according to Claim 1, characterized in that the oxidation of the cobalt layer or iron layer to form the cobalt oxide layer or iron oxide layer is carried out in a temperature range from 520 to 680°C.

3. Process according to Claim 1 or 2, characterized in that the conversion of the cobalt oxide or iron oxide with the lithium carbonate to form lithium cobaltite or lithium ferrite is carried out in a temperature range from 650 to 730°C.

4. Process according to one of the preceding claims, characterized in that the porous cobalt layer or iron layer is formed from a suspension of finely powdered cobalt or iron in a liquid binder, processing the suspension to form a sheet and sintering the sheet in a reducing atmosphere.

5. Process according to Claim 4, characterized in that the binder is removed from the sheet before sintering by increasing the temperature to a maximum of 450°C.

6. Process according to Claim 4 or 5, characterized in that powdered graphite is added to the suspension and is oxidized after the sintering.

7. Process according to Claim 6, characterized in that the proportion of graphite in the suspension, relative to the weight of the cobalt or iron, is adjusted to 10 to 30% by weight.

8. Process according to Claim 6 or 7, characterized in that graphite having a mean particle size of 10 to 40 µm is used.

9. Process according to one of Claims 6 to 8, characterized in that the graphite is combusted before the cobalt layer or iron layer is filled with lithium carbonate.

10. Process according to one of Claims 6 to 8, characterized in that the graphite is combusted after filling the cobalt layer or iron layer with lithium carbonate.

11. Process according to one of the preceding claims, characterized in that, before oxidation to form the cobalt oxide layer or iron oxide layer, the cobalt layer or iron layer, is combined with the matrix layer and the anode layer to a layer arrangement corresponding to the fuel cell.

12. Process according to Claim 11, characterized in that the porous cobalt layer or iron layer is first filled with lithium carbonate and then combined with the matrix layer and the anode layer to form the layer arrangement.

13. Process according to Claim 11, characterized in that, in the layer arrangement, an interlayer composed of lithium carbonate is disposed between the cobalt layer or iron layer and the matrix layer, the lithium carbonate interlayer being melted to fill the cobalt layer or iron layer with lithium carbonate before the oxidation of the cobalt layer or iron layer to form the cobalt oxide layer or iron oxide layer.

14. Process according to Claim 12 or 13, characterized in that the anode layer is filled with a molten electrolyte before forming the layer arrangement.

15. Process according to Claim 12 or 13, characterized in that the matrix layer is composed of two layers and an interlayer of the molten electrolyte is disposed between the two layers of the matrix layer in the layer arrangement.

16. Process according to Claim 14 or 15, characterized in that the molten electrolyte is melted before the oxidation of the cobalt layer or iron layer to form the cobalt oxide layer or iron oxide layer.

17. Process according to Claim 16, characterized in that the melting of the molten electrolyte is carried out in a reducing atmosphere.

18. Process according to one of the preceding claims, characterized in that the layer arrangement on that side of the cobalt layer or iron layer which is remote from the matrix layer is provided with a porous nickel layer filled with lithium carbonate or lithium-rich lithium/potassium carbonate, the lithium carbonate or lithium-rich lithium/potassium carbonate being melted after the oxidation of the cobalt layer or iron layer and the nickel layer being oxidized under these circumstances to form a nickel oxide layer.

19. Process according to Claim 18, characterized in that a nickel layer is used which has a greater layer thickness than the cobalt layer or iron layer.

## Revendications

1. Procédé de fabrication d'une cellule électrochimique en carbonate fondu à partir d'une couche matricielle imprégnée avec un électrolyte fondu contenant du carbonate de lithium, qui est pourvue sur une face d'une couche anodique poreuse et sur l'autre face d'une couche cathodique poreuse en cobaltite de lithium ou en ferrite de lithium, caractérisé en ce que l'on forme la couche cathodique par remplissage d'une couche poreuse de cobalt ou de fer avec du carbonate de lithium pur ou avec un mélange de carbonate de potassium et lithium, plus riche en lithium que ce qui correspond à l'électrolyte fondu, dans une première étape du procédé, oxydation de la couche de cobalt ou de fer remplie de carbonate de lithium dans une atmosphère oxydante de façon à obtenir une couche d'oxyde de cobalt ou d'oxyde de fer remplie de carbonate de lithium à une température inférieure au point de fusion du carbonate de lithium dans une deuxième étape du procédé, et augmentation de la température au-dessus du point de fusion du carbonate de lithium et conversion de l'oxyde de cobalt ou de l'oxyde de fer avec du carbonate de lithium en cobaltite de lithium ou en ferrite de lithium dans une troisième étape du procédé.

2. Procédé suivant la revendication 1, caractérisé en ce que l'on effectue l'oxydation de la couche de cobalt ou de fer en une couche d'oxyde de cobalt ou d'oxyde de fer dans un domaine de température de 520 à 680°C.

3. Procédé suivant la revendication 1 ou 2, caractérisé en ce que l'on effectue la conversion de l'oxyde de cobalt ou de l'oxyde de fer avec le carbonate de lithium en cobaltite de lithium ou en ferrite de lithium dans un domaine de température de 650 à 730°C.

4. Procédé suivant l'une quelconque des revendications précédentes, caractérisé en ce que l'on forme la couche poreuse de cobalt ou de fer à partir d'une suspension de cobalt ou de fer finement pulvérisé dans un liant liquide, par conditionnement de la suspension en une feuille et frittage de la feuille dans une atmosphère réductrice.

5. Procédé suivant la revendication 4, caractérisé en ce que le liant est éliminé de la feuille avant le frittage par élévation de la température à 450°C maximum.

6. Procédé suivant la revendication 4 ou 5, caractérisé en ce que l'on ajoute à la suspension du graphite pulvérulent, qui est oxydé après le frittage.

7. Procédé suivant la revendication 6, caractérisé en ce que la portion de graphite dans la suspension, rapportée au poids du cobalt ou du fer, est fixée à 10 à 30 % en poids.

8. Procédé suivant la revendication 6 ou 7, caractérisé en ce que l'on utilise du graphite ayant une granulométrie moyenne de 10 à 40 µm.

9. Procédé suivant l'une quelconque des revendications 6 à 8, caractérisé en ce que l'on brûle le graphite avant le remplissage de la couche de cobalt ou de fer avec du carbonate de lithium.

10. Procédé suivant l'une quelconque des revendications 6 à 8, caractérisé en ce que l'on brûle le graphite après le remplissage de la couche de cobalt ou de fer avec du carbonate de lithium.

11. Procédé suivant l'une quelconque des revendications précédentes, caractérisé en ce que l'on réunit la couche de cobalt ou de fer, avant l'oxydation en une couche d'oxyde de cobalt ou d'oxyde de fer, avec la couche matricielle et la couche anodique pour former un arrangement de couches correspondant à la cellule électrochimique.

12. Procédé suivant la revendication 11, caractérisé en ce que l'on remplit d'abord la couche poreuse de cobalt ou de fer avec du carbonate de lithium et on la réunit ensuite avec la couche matricielle et la couche anodique pour former l'arrangement de couches.

13. Procédé suivant la revendication 11, caractérisé en ce que, dans l'arrangement de couches, on dispose une couche intermédiaire en carbonate de lithium entre la couche de cobalt ou de fer et la couche matricielle, la couche intermédiaire en carbonate de lithium étant fondue pour le remplissage de la couche de cobalt ou de fer avec du carbonate de lithium avant l'oxydation de la couche de cobalt ou de fer en une couche d'oxyde de cobalt ou d'oxyde de fer.

14. Procédé suivant la revendication 12 ou 13, caractérisé en ce que l'on remplit la couche anodique avec un électrolyte fondu avant la formation de l'arrangement de couches.

15. Procédé suivant la revendication 12 ou 13, caractérisé en ce que la couche matricielle se compose de deux couches et une couche intermédiaire constituée de l'électrolyte fondu est disposée dans l'arrangement de couches entre les deux couches de la couche matricielle.

16. Procédé suivant la revendication 14 ou 15, caractérisé en ce que l'on fond l'électrolyte fondu avant l'oxydation de la couche de cobalt ou de fer en une couche d'oxyde de cobalt ou d'oxyde de fer.

17. Procédé suivant la revendication 16, caractérisé en ce que l'on effectue la fusion de l'électrolyte fondu dans une atmosphère réductrice.

18. Procédé suivant l'une quelconque des revendications précédentes, caractérisé en ce que l'arrangement de couches est pourvu, sur la face de la couche de cobalt ou de fer située à l'opposé de la couche matricielle, d'une couche de nickel poreuse remplie de carbonate de lithium ou de carbonate de potassium et lithium riche en lithium, le carbonate de lithium ou le carbonate de potassium et lithium riche en lithium étant fondu après l'oxydation de la couche de cobalt ou de fer et la couche de nickel étant ainsi oxydée en une couche d'oxyde de nickel.

19. Procédé suivant la revendication 18, caractérisé en ce que l'on utilise une couche de nickel, qui présente une épaisseur de couche plus grande que la couche de cobalt ou de fer.
